# EUROPÄISCHE PATENTANMELDUNG

(11) **EP 4 371 823 A2**
(43) Veröffentlichungstag der Anmeldung: **22.05.2024**
(21) Anmeldenummer: 24166997.7
(22) Anmeldetag: 11.07.2019
(51) Int. Cl.: B60R 1/12

(54) **RÜCKBLICKVORRICHTUNG**

(30) Priorität: 11.07.2018 DE 102018116836
(62) Teilanmeldung aus: 19748478.5
(71) Anmelder: Motherson Innovations Company Ltd., London EC2N 2AX (GB)
(72) Erfinder: POMPAREW, Hans-Dieter, 70327 Stuttgart (DE); SCHMIERER, Arne, 70327 Stuttgart (DE); ANDREI, Stefan, 70327 Stuttgart (DE)
(74) Vertreter: Weber-Bruls, Dorothée

(57) **Zusammenfassung**

Die Erfindung betrifft eine Rückblickvorrichtung (1) für ein Fahrzeug (17), umfassend zumindest einen Sensor (13, 15) zur Erfassung von Informationen der Umgebung des Fahrzeugs (17), wobei die Rückblickvorrichtung (1) mittels zumindest einer ersten Befestigungseinrichtung (5) an der Tragstruktur des Fahrzeugs (17) befestigbar ist, wobei die Rückblickvorrichtung (1) zumindest einen Arm (3) umfasst, der mittels der ersten Befestigungseinrichtung (5) um zumindest eine, zumindest eine vertikale Komponente aufweisende erste Drehachse (D1) um zumindest einen ersten Drehpunkt für eine erste Drehung drehbar gelagert ist.

## Beschreibung

Die vorliegende Erfindung betrifft eine Rückblickvorrichtung für ein Fahrzeug nach dem Oberbegriff von Anspruch 1.

Aus dem Stand der Technik sind Rückblickvorrichtung in Form von Außenspiegeln bzw. Innenspiegeln bekannt. In letzter Zeit, insbesondere im Rahmen der Bemühungen zum autonomen Fahren, werden mehr und mehr solche Rückblickvorrichtungen als kamerabasierte Systeme ausgebildet. Anstelle eines Spiegels wird ein Sensor, insbesondere eine Kamera, eingesetzt, um den üblicherweise durch den Spiegel abgebildeten Bereich mittels des Sensors aufzunehmen und dem Fahrer bzw. Insassen des Fahrzeugs mittels einer Anzeigevorrichtung, wie einem Monitor oder Display anzuzeigen. In derartigen kamerabasierte Systemen weist der Sensor jedoch einen begrenzten Raumwinkel auf. Dies führt dazu, dass eine Mehrzahl von Sensoren eingesetzt werden müssen, um einen mit dem Rückblickspiegel vergleichbaren Bereich abzudecken, insbesondere tote Winkel zu vermeiden. Darüber sind solche kamerabasierten Systeme in den bisher bekannten Fahrzeugen nicht einfach nachrüstbar, zumindest nicht mit einem unverhältnismäßigen Aufwand traditionelle Rückspiegel bzw. Rückblickvorrichtungssysteme durch ein kamerabasiertes System ersetzbar.

Die EP 3 254 902 A1 betrifft eine Überwachungsvorrichtung für das Umfeld eines Fahrzeugs, insbesondere für ein Spiegelersatzsystem, mit einem ersten Tragelement, das lagefest mit dem Fahrzeug verbindbar ist, einem zweiten Tragelement, einem ersten Schwenkmechanismus, der das erste und zweite Trageelement miteinander verbindet, und einer Sensoreinheit, die einen räumlichen Erfassungsbereich aufweist, wobei das zweite Tragelementbezüglich des ersten Tragelements über den ersten Schwenkmechanismus in wenigstens einer bestimmten Winkelposition feststellbar ist, dadurch gekennzeichnet, dass das zweite Tragelement über einen zweiten Schwenkmechanismus mit einem dritten Tragelement verbunden ist, und dass die Sensoreinheit in dem dritten Tragelement angeordnet ist.

Aus der US 2017/280111 A1 ist eine seitliche Rückansichtsichtanordnung für ein Fahrzeug bekannt, umfassend eine fest am Fahrzeug befestigte Basis; einen Tragarm, der schwenkbar an der Basis befestigt ist, wobei der Tragarm schwenkbar zwischen eingefahrener und ausgefahrener Position ist; einen Positionierungsarm, der an dem Stützarm befestigt und in Bezug auf den Stützarm beweglich ist, wobei der Positionierungsarm ein distales Ende definiert; eine Kamera, die an dem distalen Ende des Positionierungsarms angebracht ist, so dass sich die Kamera mit dem Positionierungsarm bewegt, wenn sich der Positionierungsarm relativ zu dem Stützarm bewegt, wobei die Kamera konfiguriert ist, um Bilder außerhalb des Fahrzeugs bereitzustellen; und einen Kameramotor, der betriebsmäßig mit der Kamera verbunden ist, um die Ausrichtung der Kamera in Bezug auf das distale Ende des Positionierungsarms zu ändern.

Ferner beschreibt die EP 2 955 065 A1 ein Fahrzeug, insbesondere Nutzfahrzeug, mit einem Kamera-Monitor-System als Spiegelersatzsystem, mit wenigstens einer Kamera, die beidseitig oder einseitig außen am Fahrzeug in Fahrzeuglängsrichtung gesehen nach rückwärts gerichtet, insbesondere im vorderen oberen Eckbereich eines Fahrerhauses eines Nutzfahrzeugs, mittels einer Kamerahalterung befestigt ist.

Es ist daher Aufgabe der vorliegenden Erfindung die gattungsgemäße Rückblickvorrichtung derart weiterzuentwickeln, dass sie die Nachteile des Stands der Technik überwindet, und insbesondere einen verbesserten Raumwinkelbereich aufweist und ferner nachrüstbar ist, insbesondere um einfach und kostengünstig eine traditionelle spiegelbasierte Rückblickvorrichtung zumindest teilweise zu ersetzen.

Diese Aufgabe wird erfindungsgemäß durch die Merkmale des Kennzeichens von Anspruch 1 gelöst.

Erfindungsgemäß umfasst die Rückblickvorrichtung zumindest einen Arm, der mittels der ersten Befestigungseinrichtung um zumindest eine, zumindest eine vertikale Komponente aufweisende erste Drehachse um zumindest einen ersten Drehpunkt für eine erste Drehung drehbar gelagert ist.

Dabei ist besonders bevorzugt, dass der Sensor zumindest eine Kamera, zumindest einen IR-Sensor, zumindest einen Radarsensor, zumindest einen Ultraschallsensor, zumindest einen Lidarsensor und/oder zumindest einen Time of flight (TOF)-Sensor umfasst.

Auch wird mit der Erfindung vorgeschlagen, dass die Umgebung des Fahrzeugs bezüglich einer Hauptfahrrichtung des Fahrzeugs zumindest einen Seitenbereich, zumindest einen Heckbereich, zumindest einen Frontbereich und/oder zumindest einen Innenraumbereich zumindest teilweise umfasst.

Weiterhin schlägt die Erfindung vor, dass die erste Befestigungseinrichtung zumindest eine den Drehpunkt aufweisende und mit der Tragstruktur zumindest mittelbar in Wirkverbindung stehende Befestigungsplatte aufweist.

Erfindungsgemäß ist vorgesehen, dass der Arm mittels einer Drehung um die erste Drehachse in zumindest eine Ausweichposition und/oder zumindest eine Betriebsposition überführbar ist.

Bei der vorgenannten Ausführungsform ist besonders bevorzugt, dass der Arm in der Betriebsposition mittels zumindest einer Halteraste feststellbar ist.

Ferner ist erfindungsgemäß zumindest ein Federelement vorgesehen, mittels dem der Arm in die Betriebsposition zwingbar ist. Zudem kann zumindest ein erstes weiteres Federelement, mittels dem der Arm in die Ausweichposition zwingbar ist, und/oder zumindest ein zweites weiteres Federelement, vorzugsweise ein Paar zweiter weiterer Federelemente, mittels dem der Arm in der Betriebsposition haltbar ist, vorgesehen sein.

Weiterhin schlägt die Erfindung vor, dass der Arm über zumindest ein erstes Zwischenlager mit dem ersten Drehpunkt verbunden ist, wobei vorzugsweise das Zwischenlager um den ersten Drehpunkt und/oder die erste Drehachse drehbar ist bei einer Bewegung des Arms aus der Betriebsposition in die Ausweichposition und/oder aus der Ausweichposition in die Betriebsposition.

Bei dieser vorgenannten Ausführungsform ist besonders bevorzugt, dass das Zwischenlager eine zweite Drehung des Arms um zumindest eine, vorzugsweise zu der ersten Drehachse beabstandete und/oder parallel zu der ersten Drehachse verlaufende, zweite Drehachse und/oder einen, insbesondere von dem ersten Drehpunkt beabstandeten, zweiten Drehpunkt ermöglicht.

Weiterhin schlägt die Erfindung vor, dass das Zwischenlager zumindest ein den ersten Drehpunkt und den zweiten Drehpunkt verbindendes Hebelelement umfasst.

Auch kann eine erfindungsgemäße Rückblickvorrichtung gekennzeichnet sein, dass bei der ersten Drehung, insbesondere bei einer Bewegung des Arms aus der Betriebsposition in die Ausweichposition und umgekehrt, das Zwischenlager samt Arm um die erste Drehachse drehbar ist, vorzugsweise eine Drehung des Arms um die zweite Drehachse unterbleibt.

Weiterhin wir mit der Erfindung vorgeschlagen, dass der Arm mittels der zweiten Drehung aus der Betriebsposition in zumindest eine, vorzugsweise der Ausweichposition entgegengesetzte Parkposition überführbar ist, vorzugsweise in der Parkposition, insbesondere mittels zumindest eines dritten weiteren Federelements, festlegbar ist.

Weiterhin kann eine erfindungsgemäße Rückblickvorrichtung gekennzeichnet sein durch zumindest ein erstes, vorzugsweise zumindest bereichsweise im ersten Drehpunkt angeordnetes und/oder die Drehung um die erste Drehachse ermöglichendes Drehlager, und/oder zumindest ein zweites, vorzugsweise zumindest bereichsweise im zweiten Drehpunkt angeordnetes und/oder die Drehung um die erste Drehachse ermöglichendes Drehlager.

Dabei ist besonders bevorzugt, dass das erste Drehlager zumindest ein mit der Befestigungseinrichtung in Wirkverbindung stehendes, insbesondere mit der Befestigungseinrichtung verbundenes und/oder fixiertes, erstes Lagerelement und zumindest ein mit dem Arm und/oder dem Zwischenlager in Wirkverbindung stehendes, insbesondere mit dem Arm und/oder dem Zwischenlager verbundenes und/oder fixiertes, zweites Lagerelement umfasst, und/oder das zweite Drehlager zumindest ein mit dem Zwischenlager in Wirkverbindung stehendes, insbesondere mit dem Zwischenlager verbundenes und/oder fixiertes, erstes Lagerelement und zumindest ein mit dem Arm in Wirkverbindung stehendes, insbesondere mit dem Arm verbundenes und/oder fixiertes, zweites Lagerelement umfasst, wobei insbesondere das erste Lagerelement und/oder das zweite Lagerelement exzentrisch bezüglich der ersten Drehachse und/oder der zweiten Drehachse gelagert ist bzw. sind.

Bei den beiden vorgenannten Ausführungsformen ist besonders bevorzugt, dass das erste Drehlager und/oder das zweite Drehlager eine Drehung um die erste Drehachse bzw. die zweite Drehachse stufenlos und/oder in zumindest zwei, vorzugsweise einer Vielzahl von vordefinierten Schritten ermöglicht.

Auch kann eine erfindungsgemäße Rückblickvorrichtung dadurch gekennzeichnet sein, dass das erste Drehlager und/oder das zweite Drehlager zumindest eine Einstellenrichtung umfasst, wobei die Einstelleinrichtung zumindest eine Feststelleinrichtung, zumindest eine Klemmvorrichtung, zumindest eine Rastvorrichtung und/oder zumindest eine Arretiervorrichtung umfasst.

Bei der vorgenannten Ausführungsform ist besonders bevorzugt, dass die Einstelleinrichtung zumindest ein mit dem ersten Lagerelement mitnahmesicher verbundenes erstes Eingriffselement und zumindest ein mit dem zweiten Lagerelement mitnahmesicher verbundenes zweites Eingriffselement umfasst, wobei das erste Eingriffselement in zumindest einer, vorzugsweise einer Vielzahl von, Drehpositionen in das zweite Eingriffselement eingreift oder das zweite Eingriffselement in zumindest einer, vorzugsweise einer Vielzahl von, Drehpositionen in das erste Eingriffselement eingreift.

Auch wird mit der Erfindung vorgeschlagen, dass das erste Eingriffselement relativ zu dem ersten Lagerelement bewegbar gelagert ist und mittels zumindest eines ersten Vorspannelementes, insbesondere umfassend zumindest ein viertes weiteres Federelement, in Richtung des zweiten Lagerelementes und/oder des zweiten Eingriffselementes vorgespannt ist und/oder das zweite Eingriffselement relativ zu dem zweiten Lagerelement bewegbar gelagert ist und mittels zumindest eines zweiten Vorspannelementes, insbesondere umfassend zumindest ein fünftes weiteres Federelement, in Richtung des ersten Lagerelementes und/oder des ersten Eingriffselementes vorgespannt ist.

Die beiden vorgenannten Ausführungsformen können insbesondere dadurch gekennzeichnet sein, dass das erste Eingriffselement zumindest einen Stift, zumindest einen Bolzen, zumindest eine Erhebung und/oder zumindest einen Rastring umfasst und das zweite Eingriffselement zumindest zwei, vorzugsweise eine Mehrzahl von komplementär zu zumindest einem Bereich des ersten Eingriffselementes ausgebildeten Aufnahmen, Vertiefungen und/oder Senken umfasst oder das zweite Eingriffselement zumindest einen Stift, zumindest einen Bolzen, zumindest eine Erhebung und/oder zumindest einen Rastring umfasst und das erste Eingriffselement zumindest zwei, vorzugsweise eine Mehrzahl von komplementär zu zumindest einem Bereich des ersten Eingriffselementes ausgebildeten Aufnahmen, Vertiefungen und/oder Senken umfasst.

Weiterhin wird mit der Erfindung vorgeschlagen, dass das erste Eingriffselement oder das zweite Eingriffselement in eine Richtung im Wesentlichen senkrecht zu der ersten Drehachse und/oder der zweiten Drehachse bewegbar gelagert ist.

Auch wird für die Rückblickvorrichtung vorgeschlagen, dass das erste Eingriffselement zumindest einen Rastbolzen umfasst, wobei der Rastbolzen mittels des ersten Vorspannelementes in Eingriff mit zumindest eine von dem zweiten Eingriffselement umfasste, zumindest eine Vertiefung umfassende Kulisse zwingbar ist oder das zweite Eingriffselement zumindest einen Rastbolzen umfasst, wobei der Rastbolzen mittels des zweiten Vorspannelementes in Eingriff mit zumindest eine von dem ersten Eingriffselement umfasste, zumindest eine Vertiefung umfassende Kulisse zwingbar ist.

Weiterhin ist bevorzugt, dass das erste Eingriffselement oder das zweite Eingriffselement in eine Richtung im Wesentlichen parallel zu der ersten Drehachse und/oder der zweiten Drehachse bewegbar gelagert ist.

Bei der vorgenannten Ausführungsform wird insbesondere bevorzugt, dass das erste Eingriffselement in Form zumindest eines, vorzugsweise zumindest eine Erhebung, insbesondere eine Vielzahl von Erhebungen aufweisenden Rastrings ausgebildet ist, wobei der Rastring mittels des ersten, vorzugsweise zumindest einen Federring aufweisenden, Vorspannelementes, in Richtung des zweiten Eingriffselementes zwingbar ist oder das zweite Eingriffselement in Form zumindest eines, vorzugsweise zumindest eine Erhebung, insbesondere eine Vielzahl von Erhebungen aufweisenden Rastrings ausgebildet ist, wobei der Rastring mittels des zweiten, vorzugsweise zumindest einen Federring aufweisenden, Vorspannelementes, in Richtung des ersten Eingriffselementes zwingbar ist.

Für die vorgenannte Ausführungsform ist besonders bevorzugt, dass der Rastring und das erste und/oder zweite Vorspannelement mittels zumindest einer sich entlang der ersten Drehachse oder der zweiten Drehachse ersteckenden Achselementes, vorzugsweise umfassend zumindest eine Rohrniet, gelagert sind.

Besonders bevorzugte Ausführungsformen sehen vor, dass das Federelement und/oder das erste, zweite, dritte vierte und fünfte weitere Federelement zumindest eine Zugfeder, zumindest eine Druckfeder, zumindest eine Federscheibe und/oder zumindest eine Formfeder umfasst bzw. umfassen und/oder das zweite, dritte vierte und fünfte weitere Federelement zumindest eine Rastfeder umfasst.

Weiterhin wird mit der Erfindung vorgeschlagen, dass der Sensor mittels zumindest einer zweiten Befestigungseinrichtung an dem Arm festlegbar ist.

Bei der vorgenannten Ausführungsform ist besonders bevorzugt, dass mittels der zweiten Befestigungseinrichtung der Abstand des Sensors in Bezug auf den ersten Drehpunkt und/oder den zweiten Drehpunkt veränderbar ist, insbesondere eine radiale Position des Sensors entlang des Arms bezüglich des ersten Drehpunktes und/oder des zweiten Drehpunktes, vorzugsweise stufenlos und/oder in vordefinierten Schritten, veränderbar ist.

Weiterhin schlägt die Erfindung vor, dass die zweite Befestigungseinrichtung zumindest eine Klemmvorrichtung, zumindest eine Schraubvorrichtung, zumindest eine Rastvorrichtung, zumindest eine magnetische Verbindungsvorrichtung zumindest eine Klebevorrichtung und/oder zumindest eine Spannvorrichtung umfasst.

Schließlich wird für die Rückblickvorrichtung vorgeschlagen, dass die erste Drehung, die zweite Drehung und/oder die Bewegung des Sensors entlang des Arms und/oder entlang des Fahrzeugs mittels zumindest eines Aktuators erreichbar ist, vorzugsweise während einer Bewegung des Fahrzeugs.

Der Erfindung liegt somit die überraschende Erkenntnis zugrunde, dass eine kamerabasierte Rückblickvorrichtung zur Verfügung gestellt werden kann, die es ermöglicht, konservative Rückblickvorrichtungen, bei denen ein Spiegel eingesetzt wird, auf ein kamerabasiertes bzw. sensorbasiertes Rückblicksystem auf einfache und kostengünstige Weise umzurüsten bzw. auch solche zu ersetzen. Dabei kann das sensorbasierte System an jeglicher Fahrzeugausführung an die Fahrzeugkabine von außen oder innen durch entsprechende Befestigungsmittel, wie Befestigungsschrauben, befestigt werden. Insbesondere können die bereits an dem Fahrzeug vorhandenen Befestigungseinrichtungen wie Befestigungsplatten genutzt werden.

Die Verwendung eines Arms in der Rückblickvorrichtung führt ferner zu dem Vorteil, dass der durch den jeweiligen Sensor einsehbare Bereich vergrößert werden kann, da der Abstand zwischen dem Fahrzeug und dem Sensor vergrößert werden kann.

Gleichzeitig ermöglicht es die erfindungsgemäße Rückblickvorrichtung, dass diese an die jeweiligen Gegebenheiten angepasst werden kann, da der Arm es ermöglicht, den Sensor in einer beliebigen Position entlang des Armes und Ausrichtung relativ zum Fahrzeug und der Umgebung positionieren zu können, also die Position des Sensors, insbesondere der Kamera frei an den Arm gewählt und positioniert werden kann. Bevorzugt erfolgt die Befestigung des Sensors bzw. der Kamera mittels einer zweiten Befestigungseinrichtung, wie einem Klemm- oder Schraubsystem.

Gleichzeitig erfüllt die Rückblickvorrichtung die entsprechenden Sicherheitsstandards, da der Arm mittels einer ersten Drehung um eine erste Drehachse bzw. einen ersten Drehpunkt aus einer Betriebsposition in einer Ausweichposition bzw. bei einer zweiten Drehung bzw. eine zweite Drehachse um einen zweiten Drehpunkt in eine Parkposition überführt werden kann. So wird es ermöglicht, die Breite des Fahrzeugs in einer Parksituation zu verringern, indem der Arm an das Fahrzeug "angeklappt" wird. Gleichzeitig stellt die Ausweichposition sicher, dass bei einer Berührung des Arms mit einem Hindernis der Arm abklappen kann, insbesondere in die Ausweichposition überführt werden kann.

Unter einem Arm im Sinne der Erfindung wird ein Element verstanden, welches bzgl. des ersten bzw. zweiten Drehpunktes eine größere Ausdehnung in radialer Richtung als in axialer Richtung der ersten Drehachse bzw. als in eine Richtung senkrecht zu der axialen und der radialen Richtung aufweist.

Die Rückblickvorrichtung ist also so ausgebildet, dass ein Abklappen über eine Lagerung bzw. eine erste Befestigungseinrichtung erfolgen kann. Vorzugsweise wird ein Zweiachsenlager unter Zwischenschaltung eines Zwischenlagers realisiert. Je nach dem in welche Richtung die Rückblickvorrichtung abklappt, also ausweicht, bzw. anklappt, wird eine Drehung über die erste Drehachse oder die zweite Drehachse übernommen.

Die erfindungsgemäße Rückblickvorrichtung kann mit verschiedenen Sensoren ausgestattet sein. Neben Kameras können auch Infrarotsensoren, Ultraschallsensoren bzw. Radarsensoren oder Time of flight (ToF)-Sensoren eingesetzt werden. Insbesondere in dem Fall, in dem mittels des Sensors verschiedene Umgebungsbereiche des Fahrzeugs erfasst werden können, wird es möglich, eine lückenlose Überwachung der Umgebung des Fahrzeugs bereitzustellen, insbesondere eine sogenannte 360°-Ansicht des Fahrzeugs bereitzustellen. Bevorzugt ist, dass bei einem Ausklappen des Armes in die Betriebsposition unter Einwirkung einer Halteraste und einem ersten Federelement, wie einer Zugfeder, der Arm in der Betriebsposition gehalten wird, und/oder durch zumindest ein zweites Federelement zwingbar ist. Vorzugsweise wird der Arm in der Betriebsposition alternativ oder ergänzend auch mittels zumindest eines dritten Federelements, insbesondere einer Zugfeder und/oder zumindest einer Rastfeder, gehalten.

Bevorzugt erfolgt dann die Bewegung aus der Parkposition in die Betriebsposition, in der der Sensor den gewünschten Umgebungsbereich des Fahrzeugs erfassen kann, händisch durch Ausklappen der Rückblickvorrichtung.

Alternativ zu der beschriebenen Drehung aus der Parkposition und/oder der Ausweichposition in die Betriebsposition kann die Bewegung auch über einen elektrischen Aktuator erfolgen. Bei Einsatz eines Zwischenlagers wird darüber hinaus auch eine Bewegung des Armes um einen zweiten Drehpunkt ermöglicht. Dieser stellt sicher, dass die Rückblickvorrichtung nicht nur wie bei einer Kollision mit einem Hindernis in eine Ausweichposition sondern auch in die Parkposition, die vorzugsweise bzgl. der Betriebsposition der Ausweichposition gegenüberliegt, überführt werden kann.

Durch die Trennung der ersten Drehachse von der zweiten Drehachse wird es ermöglicht, dass unterschiedliche Widerstände bei der Bewegung des Armes in die Ausweichposition im Vergleich zur Parkposition realisiert werden können. Vorzugsweise sind der erste Drehpunkt und der zweite Drehpunkt örtlich voneinander getrennt und bei einer Drehung um die erste Drehachse wird die Position des Zwischenlagers relativ zu dem Arm nicht verändert, findet insbesondere keine Bewegung um die zweite Drehachse statt.

Umgekehrt wird es so ermöglicht, dass bei einer Bewegung um die zweite Drehachse eine Bewegung um die erste Drehachse unterbleibt. So wird es auf geringsten Raum ermöglicht, dass der Arm sowohl eine Bewegung in die Ausweichposition wie auch in die Parkposition durchführen kann.

Insgesamt zeichnet sich die erfindungsgemäße Rückblickvorrichtung, insbesondere in ihren bevorzugten Ausführungsformen, dadurch aus, dass bei der Rückblickvorrichtung eine An- bzw. Abklappbewegung, insbesondere aus der Betriebsposition, über zwei Drehpunkte bzw. -achsen durchgeführt werden kann, eine vordefinierte Betriebsposition durch eine Halteraste erreicht werden kann sowie die Befestigung der Rückblickvorrichtung an bereits vorhandenen Fahrzeugen ermöglicht wird, insbesondere alle gängigen Fahrzeugtypen mit einer entsprechenden Rückblickvorrichtung auch nachträglich ausgestattet werden können.

Weitere Merkmale und Vorteile der Erfindung ergeben sich aus der nachfolgenden Beschreibung, in der bevorzugte Ausführungsformen der Erfindung anhand von Figuren erläutert sind.

Dabei zeigt
- Fig. 1: eine perspektivische Aufsicht auf eine Rückblickvorrichtung gemäß der Erfindung in einer ersten Ausführungsform;
- Fig. 2: eine Aufsicht aus Richtung A in Fig. 1 auf die Rückblickvorrichtung der Fig. 1;
- Fig. 3: eine Aufsicht auf die Rückblickvorrichtung der Fig. 1 und 2 aus Richtung B in Fig. 2;
- Fig. 4: eine Aufsicht auf die Rückblickvorrichtung der Fig. 1 bis 3 aus Richtung C in Fig. 2;
- Fig. 5: eine weitere Aufsicht auf die Rückblickvorrichtung der Fig. 1 bis 4 aus Richtung C in Fig. 2 in einer Ausweichposition;
- Fig. 6: eine perspektivische Aufsicht auf eine Rückblickvorrichtung gemäß der Erfindung in einer zweiten Ausführungsform;
- Fig. 7: eine Aufsicht aus Richtung A' in Fig. 6 auf die Rückblickvorrichtung der Fig. 6;
- Fig. 8: eine Aufsicht auf die Rückblickvorrichtung der Fig. 6 und 7 aus Richtung C' in Fig. 7 in einer Betriebsposition;
- Fig. 9: eine Aufsicht auf die Rückblickvorrichtung der Fig. 6 bis 8 aus Richtung C' in Fig. 7 in einer Parkposition;
- Fig. 10: eine Aufsicht auf die Rückblickvorrichtung der Fig. 6 bis 9 aus Richtung C' in Fig. 7 in einer Ausweichposition; und
- Fig. 11: eine Aufsicht auf die Rückblickvorrichtung der Fig. 6 bis 10 aus Richtung C' in Fig. 7 mit gleichzeitig dargestellter Betriebs-, Park- und Ausweichposition; und
- Fig. 12: eine Aufsicht auf eine Rückblickvorrichtung gemäß der Erfindung in einer dritten Ausführungsform;
- Fig. 13: eine schematische Querschnittsansicht der Rückblickvorrichtung der Fig. 12 aus Richtung D in Fig. 12;
- Fig. 14: eine schematische Seitenansicht einer Rückblickvorrichtung gemäß der Erfindung in einer vierten Ausführungsform;
- Fig. 15: eine schematische Aufsicht auf die Rückblickvorrichtung der Fig. 14 aus Richtung E in Fig. 14;
- Fig. 16a: eine schematische Querschnittsansicht eines Drehlagers der Rückblickvorrichtung der Fig. 15 aus Richtung F in Fig. 15;
- Fig. 16b: eine Detailansicht des Drehlagers der Fig. 16a;
- Fig. 17a: einen in der Rückblickvorrichtung der Fig. 14 bis 16b eingesetzten Rastring; und
- Fig. 17b: eine schematische Aufsicht auf einen in der Rückblickvorrichtung der Fig. 14 bis 16b eingesetzten Federring.

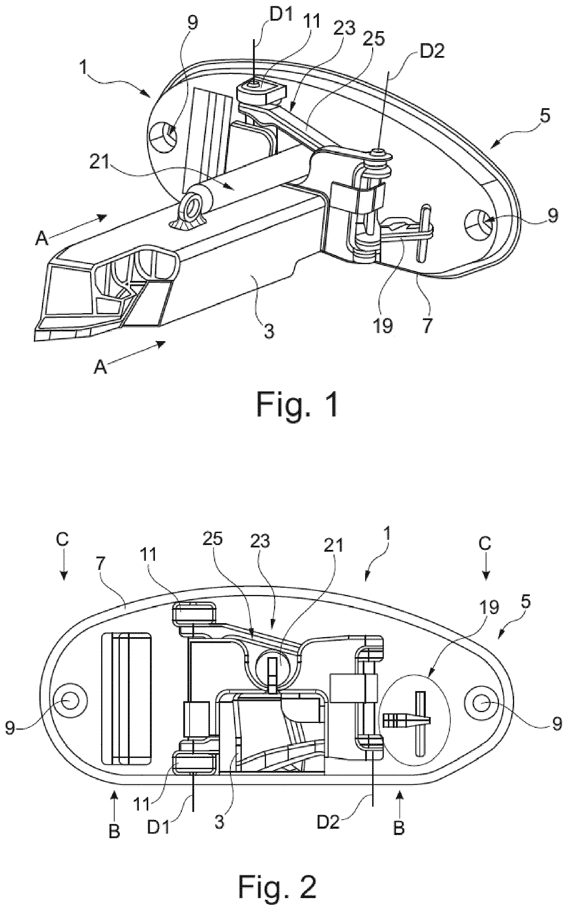

In Fig. 1 ist eine perspektivische Aufsicht auf eine Rückblickvorrichtung 1 einer ersten Ausführungsform dargestellt. Die Rückblickvorrichtung 1 umfasst erfindungsgemäß einen Arm 3 und kann mittels einer ersten Befestigungseinrichtung 5, die eine Befestigungsplatte 7 umfasst, mit einer Tragstruktur eines Fahrzeugs verbunden werden. Dafür sind insbesondere in der Befestigungsplatte 7 Befestigungspunkte 9, mit denen die Befestigungsplatte 7 bspw. mittels Schrauben an einer Tragstruktur befestigt werden kann, vorgesehen.

Die Befestigungsplatte 7 umfasst ferner Lagerelemente 11, durch die eine erste Drehachse D1 festgelegt wird. Wie später erläutert werden wird, wird durch die Lagerelemente 11 ein erster Drehpunkt, der es ermöglicht, den Arm 3 um die Drehachse D1 zu rotieren, festgelegt.

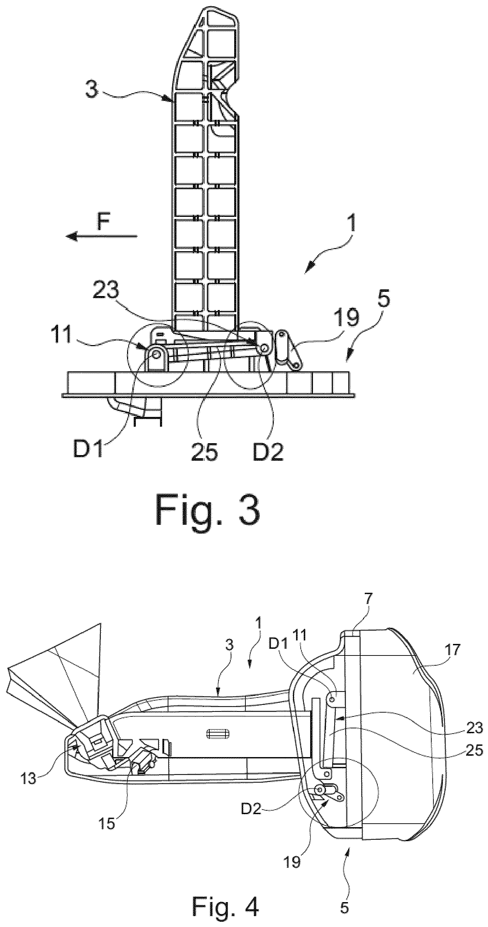

Die Drehachse D1 verläuft im Wesentlichen vertikal, dies bedeutet insbesondere senkrecht zu einer Hauptfahrrichtung F, wie insbesondere in Fig. 3 durch einen Pfeil angedeutet ist.

Wie insbesondere Fig. 4 zu entnehmen ist, sind im Bereich des Armes 3 Sensoren 13 und 15 angeordnet. Die Sensoren 13 und 15 sind jeweils als Kameras oder ähnliche Sensoren zur Erfassung von Parametern des Umfelds der Rückblickvorrichtung realisiert und ermöglichen es, den Seitenbereich des Fahrzeugs 17, welches in Fig. 4 angedeutet ist, zu überwachen.

In den Fig. 1 bis 4 ist die Rückblickvorrichtung 1 in einer Betriebsposition N dargestellt. In dieser Betriebsposition N wird der Arm 3 mittels einer Halteraste 19, die insbesondere in den Fig. 2 und 3 dargestellt ist, gehalten. Dieses Halten in der Betriebsposition N wird mittels einer Zugfeder 21, die ein zweites Federelement darstellt, unterstützt. Dieses zweite Federelement zwingt den Arm 3 in die Betriebsposition N und hält ihn in Zusammenwirkung mit der Halteraste 19 in dieser Position.

Wie nachfolgend erläutert wird, ermöglicht es die Drehung um die Drehachse D1, dass die Rückblickvorrichtung 1 in eine Ausweichposition Q überführt werden kann. Wie außerdem noch erläutert wird, ermöglicht es die Drehung um eine Drehachse D2, dass die Rückblickvorrichtung 1 in eine (nicht dargestellte) Parkposition überführt werden kann.

Entweder mittels eines nicht dargestellten Aktuators, insbesondere eines elektrischen, elektromagnetischen, magnetischen und/oder eines zumindest ein Formgedächtnislegierungselement umfassenden Aktuators, oder manuell durch einen Benutzer des Fahrzeugs kann die Rückblickvorrichtung 1 sowohl aus der Parkposition wie auch aus der Ausweichposition Q in die in den Fig. 1 bis 4 dargestellte Betriebsposition N rücküberführt werden.

Die Verwendung des Armes 3 in der Rückblickvorrichtung 1 bietet den Vorteil, dass die Kameras 13, 15 mit einem gewissen Abstand von der Tragstruktur des Fahrzeugs 17 angeordnet werden können. Dies ermöglicht es, dass ein im Vergleich zu bisher bekannte kameraunterstützten Rückblickvorrichtungen verbesserte Winkel im Bereich über die Kameras 13, 15 abgedeckt werden kann. Ferner verhindert, zumindest vermindert, dies eine Ausbildung von toten Winkelbereichen und ermöglicht es auch mittels einer geringen Anzahl von Sensoren bzw. Kameras den gesamten Umgebungsbereich des Fahrzeugs zu erfassen.

In der Parkposition kann der Arm nun an das Fahrzeug 17, insbesondere die Tragstruktur des Fahrzeugs, "angeklappt" werden und so die Breite des Fahrzeugs, insbesondere beim Ein- und Ausparken reduziert werden. Dabei können jedoch die Kameras 13 weiterhin dazu eingesetzt werden, um den Umgebungsbereich des Fahrzeugs zu überwachen. Dazu ist insbesondere vorgesehen, dass die Sensoren 13, 15 über nicht dargestellte zweite Befestigungseinrichtungen mit dem Arm 3 verbunden sind. Diese zweiten Befestigungseinrichtungen ermöglichen es, dass die Sensoren 13, 15 im Wesentlichen an beliebigen Positionen des Armes 3 befestigt werden können, um so eine bestmögliche Erfassung des Umgebungsbereiches des Fahrzeugs zu ermöglichen.

In besonders bevorzugten Ausführungsformen ist vorgesehen, dass die zweite Befestigungseinrichtung es ermöglicht, dass die Position der Sensoren 13, 15 bzw. deren Ausrichtung verändert werden kann. So kann bspw. bei einem Parkvorgang, in der sich der Arm 3 bzw. die Rückblickvorrichtung 1 in der Parkposition befindet, die Ausrichtung bzw. Position des Sensors 15 so verändert werden, dass ein unterer Seitenbereich des Fahrzeugs erfasst wird, um so eine Kollision mit dort angeordneten Hindernissen zu vermeiden. Somit kann so verhindert werden, dass ein Fahrer beim Ein- und Ausparken Hindernisse übersieht.

Um darüber hinaus den Sicherheitsbestimmungen zu entsprechen, ist es notwendig, dass die Rückblickvorrichtung 1 es ermöglicht, dass der Arm 3 nicht nur in Richtung der Parkposition sondern auch in eine entgegensetzte Position bei einer Berührung des Fahrzeugs mit einem Hindernis ausweichen kann, insbesondere in die Ausweichposition Q. Dazu umfasst die Rückblickvorrichtung 1, insbesondere die erste Befestigungseinrichtung 5, ein Zwischenlager 23. Das Zwischenlager 23 umfasst ein Hebelement 25, welches an einer ersten Seite an die Lagerelemente 11 bzw. im ersten Drehpunkt angreift und so um die erste Drehachse D1 gelagert ist. Der Arm 3 ist dann über einen zweiten Drehpunkt, der eine Drehung um die zweite Drehachse D2 ermöglicht, an dem Zwischenlager 23 bzw. dem Hebel 25 angebracht. Damit kann auf engstem Bauraum eine Drehung des Arms 3 sowohl um die erste Drehachse D1, und damit zwischen der Betriebsposition N und der Ausweichposition Q, als auch um die zweite Drehachse D2, und damit zwischen der Parkposition und der Betriebsposition N, realisiert werden.

Kommt es zu einer Berührung des Armes 3 durch ein Objekt, das sich insbesondere relativ zum Fahrzeug in Hauptfahrtrichtung F an dem Fahrzeug vorbeibewegt, kann der Arm 3 über den ersten Drehpunkt eine Drehung um die erste Drehachse D1 ausführen und auf diese Weise in eine Ausweichposition Q überführt werden. In dieser Ausweichposition Q ist der Arm 3 über ein nicht dargestelltes erstes Federelement festlegbar. Nach diesem Ausweichen des Arms 3 kann der Arm 3 von einem Benutzer manuell wieder in die in den Fig. 1 bis 4 dargestellte Betriebsposition N überführt werden. Befindet sich der Arm 3 hingegen in der Parkposition, so ist er in dieser Parkposition über ein nicht dargestelltes viertes Federelement festlegbar.

Die erfindungsgemäße Rückblickvorrichtung ermöglicht es somit, dass sie, insbesondere in Austausch mit bisher verwendeten, spiegelbasierten Rückblickvorrichtungen, an Fahrzeugen gängiger Typen befestigt werden kann. Einzige Voraussetzung ist, dass an dem Fahrzeug eine erste Befestigungseinrichtung vorhanden ist, die entsprechende Lagerelemente 11 aufweist. Diese ermöglichen es, dass der Arm 3 samt der entsprechenden Federelemente an dem Fahrzeug befestigt werden kann. Gleichzeitig bietet die erfindungsgemäße Rückblickvorrichtung die Möglichkeit, im Vergleich zu bisher bekannten kamerabasierten Rückblickvorrichtungen den Umgehungsbereich des Fahrzeugs besser überwachen zu können aufgrund des vergrößerten Abstands der jeweiligen Sensoren von der Tragstruktur des Fahrzeugs. Dabei werden jedoch die Sicherheitsaspekte nicht beeinträchtigt, indem die Rückblickvorrichtung ein Ausweichen des Armes in die entsprechende Ausweich- bzw. Parkposition ermöglicht.

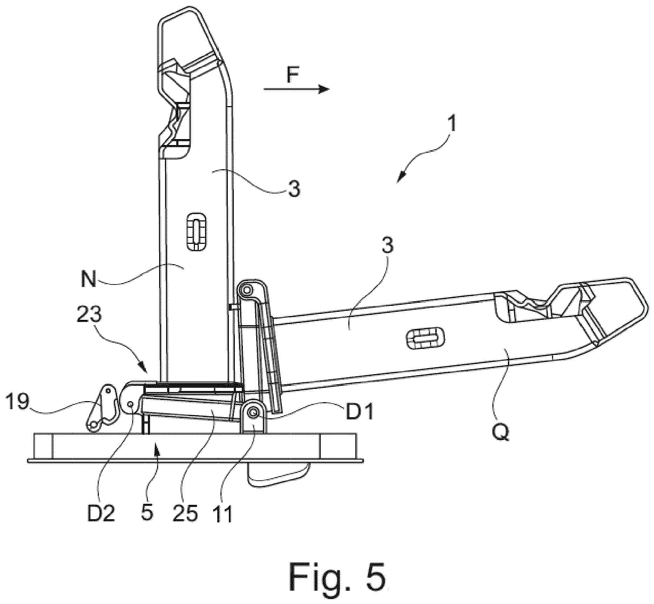

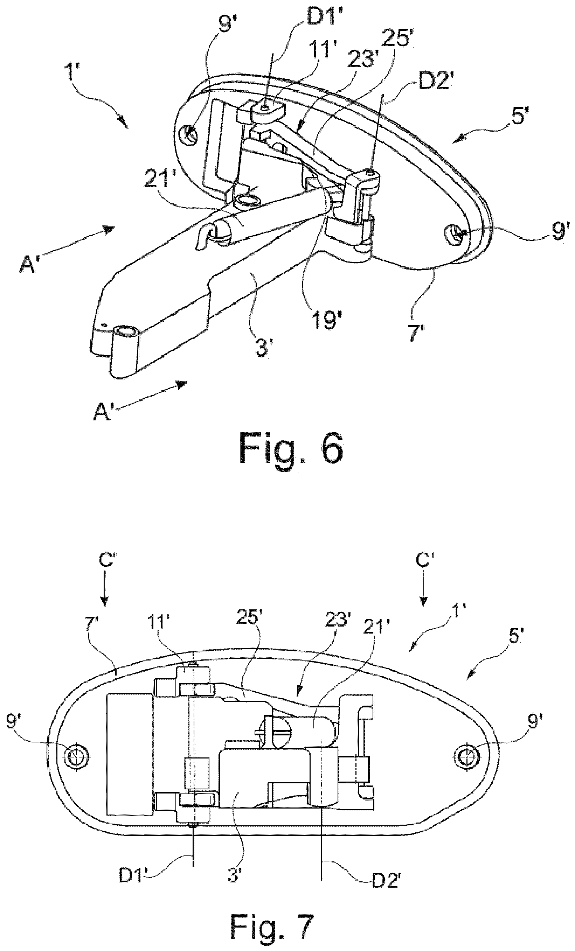

Fig. 6 zeigt eine perspektivische Aufsicht auf eine Rückblickvorrichtung 1' gemäß der Erfindung in einer zweiten Ausführungsform. Elemente der zweiten Ausführungsform der Rückblickeinrichtung 1' die funktional denen der ersten Ausführungsform der Rückblickeinrichtung 1 weitestgehend entsprechen, sind dabei mit gleichen, jedoch einfach gestrichenen Bezugszeichen versehen. Da die Funktionsweise der zweiten Ausführungsform der Rückblickvorrichtung 1' weitestgehend entsprechend der Rückblickvorrichtung 1 der ersten Ausführungsform ist, werden nachfolgend nur kurz die Figuren der zweiten Ausführungsform vorgestellt. Bezüglich der weiteren Ausführungen sind die zu den Fig. 1 bis 5 erfolgten Erläuterungen auch für diese Ausführungsform zutreffend.

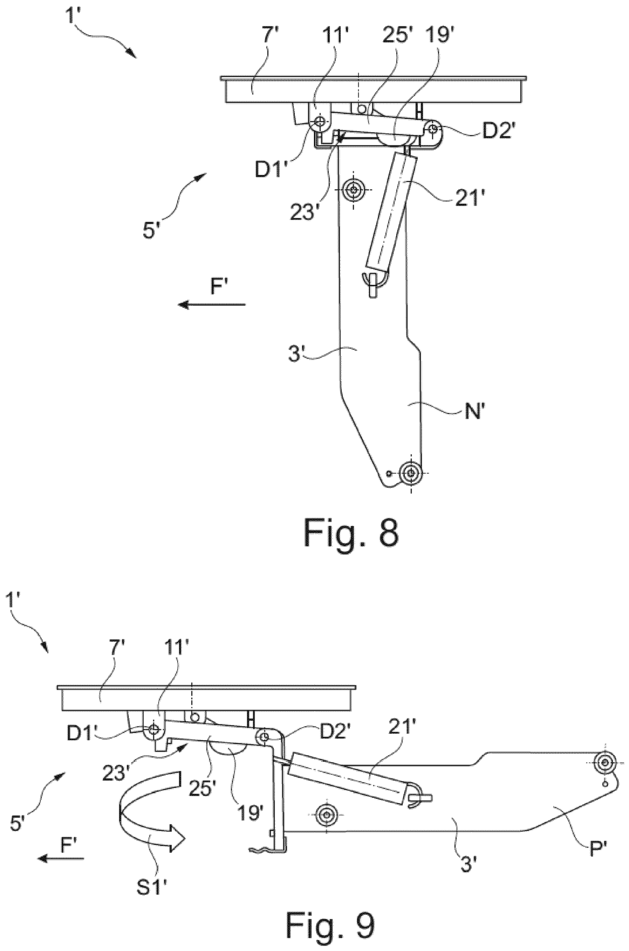

Ferner zeigt Fig. 7 eine Aufsicht aus Richtung A' in Fig. 6 auf die Rückblickvorrichtung der Fig. 6 und Fig. 8 zeigt eine Aufsicht aus Richtung C' in Fig. 7 auf die Rückblickvorrichtung der Fig. 6 und 7.

In den Fig. 6 und 7 sowie in Fig. 8 ist die Rückblickvorrichtung 1' in einer Betriebsposition N' dargestellt, in der ein Arm 3' mittels einer Halteraste 19' gehalten wird, unterstützt durch eine als zweites Federelement wirkende Zugfeder 21'. Dabei ist offensichtlich, dass im Vergleich zur ersten Ausführungsform bei der zweiten Ausführungsform, jedenfalls solange sich der Arm 3' in der Betriebsposition N' befindet, die Halteraste 19' nunmehr zwischen den beiden Drehachsen D1' und D2' angeordnet ist.

In Fig. 9 ist eine Aufsicht auf die Rückblickvorrichtung 1' der Fig. 6 bis 8 aus Richtung C' in Fig. 7 in einer Parkposition P' dargestellt. Um die Rückblickvorrichtung 1' ausgehend von der Betriebsposition N' in diese Parkposition P' zu überführen, wird der Arm 3' um die Drehachse D2' gedreht, was durch einen Pfeil S1' verdeutlicht werden soll, wodurch ein Anklappen der Rückblickvorrichtung 1' erreicht wird.

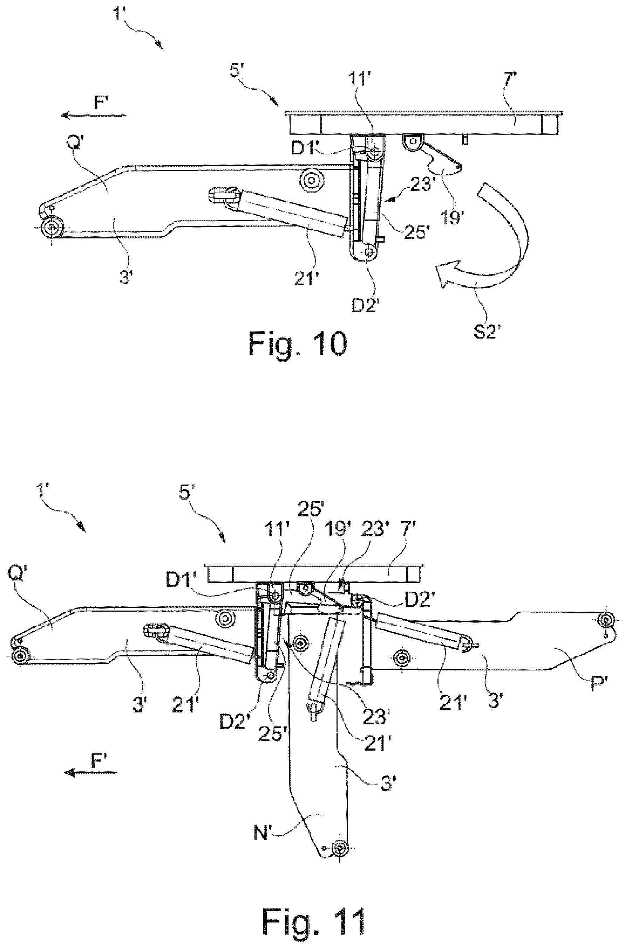

In Fig. 10 ist eine Aufsicht auf die Rückblickvorrichtung 1' der Fig. 6 bis 9 aus Richtung C' in Fig. 7 in einer Ausweichposition Q' dargestellt. Um die Rückblickvorrichtung 1' ausgehend von der Betriebsposition N' in diese Ausweichposition Q' zu überführen, wird der Arm 3' um die Drehachse D1' gedreht, was durch einen Pfeil S2' verdeutlicht werden soll, wodurch ein Abklappen der Rückblickvorrichtung 1' erreicht wird.

Fig. 11 zeigt eine Aufsicht auf die Rückblickvorrichtung 1' der Fig. 6 bis 10 aus Richtung C' in Fig. 7 mit gleichzeitig dargestellter Betriebs-, Park- und Ausweichposition N', P', Q' der Rückblickvorrichtung 1'. Es versteht sich von selbst, dass sich die Rückblickvorrichtung 1' zu einem betrachteten Zeitpunkt nur in einer dieser drei Positionen befinden kann. Insoweit dient die in Fig. 11 gewählte Darstellung nur zur Illustration der einzelnen Positionen und zu ihrer vergleichenden Darstellung.

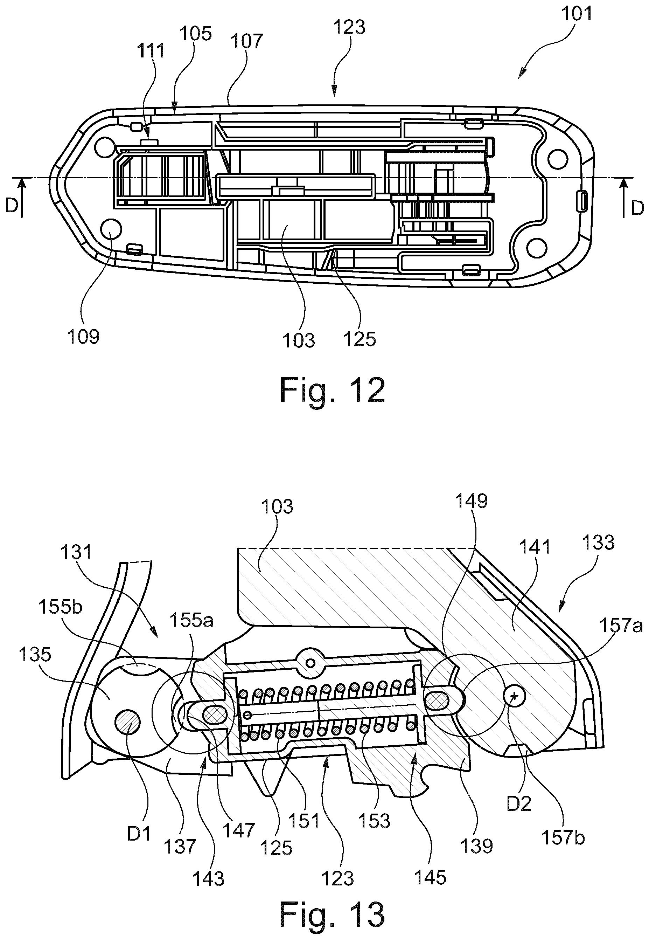

In Fig. 12 ist eine schematische Aufsicht auf eine dritte Ausführungsform einer erfindungsgemäßen Rückblickvorrichtung 101 dargestellt. Diejenigen Elemente der Rückblickvorrichtung 101, die denjenigen der Rückblickvorrichtung 1 entsprechen, tragen die gleichen Bezugszeichen, allerdings um 100 erhöht.

Im Vergleich zu der Rückblickvorrichtung 1 wurde eine alternative Ausgestaltung gewählt, um den Arm 103 in der jeweiligen Parkposition, Ausweichposition bzw. Betriebsposition zu fixieren. Insbesondere wurde auf eine Druckfeder, wie die Druckfeder 21, verzichtet, um den Arm 103 in der Betriebsposition, wie sie in den Fig. 12 und 13 dargestellt ist, festzustellen bzw. zuhalten.

Wie insbesondere der Fig. 13 zu entnehmen ist, ist im Bereich der Drehachse D1 ein erstes Drehlager 131 angeordnet. Im Bereich der zweiten Drehachse D2 ist ein zweites Drehlager 133 angeordnet.

Die jeweiligen Drehlager 131 und 133 weisen jeweilige erste und zweite Lagerelemente auf. Ein erstes Lagerelement 135 des ersten Drehlagers 131 ist derartig mit der ersten Drehachse D1 verbunden, dass eine Drehung des ersten Lagerelements 135 um die Drehachse D1 nicht möglich ist. Darüber hinaus weist das erste Drehlager 131 ein zweites Lagerelement 137 auf. Dieses zweite Lagerelement 137 steht insbesondere mit dem Hebel 125 des Zwischenlagers 123 in Verbindung, ist insbesondere einstückig mit diesem ausgebildet bzw. in diesem fixiert.

Im Gegensatz dazu ist bei dem zweiten Drehlager 133 ein erstes Lagerelement 139, welches mit dem Hebel 125 verbunden ist, insbesondere einstückig mit diesem ausgebildet ist, bezüglich der Drehachse D2 fixiert, während ein zweites Lagerelement 141 des zweiten Drehlagers 133 einstückig mit dem Arm 103 ausgebildet ist und damit drehbar um die zweite Drehachse D2 gelagert ist.

Sowohl das erste Drehlager 131 als auch das zweite Drehlager 133 weisen jeweilige Einstelleinrichtungen in Form von Rastvorrichtungen 143 und 145 auf. Die jeweiligen Rasteinrichtungen 143 und 145 weisen ein erstes Eingriffselement 147 bzw. 149 auf. Beide Eingriffselemente 147 und 149 sind als Rastbolzen ausgebildet, die durch Vorspannelemente in Form von Federn 151 bzw. 153 vorgespannt sind. Die Federn 151 und 153 können auch einteilig ausgebildet sein.

Darüber hinaus sind die Eingriffselemente 147, 149 in eine Richtung senkrecht zu den Drehachsen D1 und D2 bewegbar gelagert, insbesondere gegen die Kraft der Feder 151, 153 aus der in Fig. 13 dargestellten Position auslenkbar.

In der in Fig. 13 dargestellten Position greift der Rastbolzen 147 in ein zweites Eingriffselement in Form einer Vertiefung 155a, die an der Kulisse des Lagerelements 135 ausgebildet ist, ein. Wie der Fig. 13 zu entnehmen ist, wird bei einer Drehung des Hebels 125 um die erste Drehachse D1 der Rastbolzen 147 so geführt, dass er aus der in der Fig. 13 dargestellten Position gegen die Kraft der Feder 151 ausgelenkt wird und so aus Eingriff mit der Vertiefung 155a gelangt. Dies ermöglicht es dann, den Hebel 125 so lange weiter in Fig. 13 entgegen dem Uhrzeigersinn um die Drehachse D1 zu bewegen, bis der Rastbolzen 147 Eingriff in die Vertiefung 155b findet, wobei der Rastbolzen 147 aufgrund der Kraft des Federelements 151 in die Vertiefung 155b gezwungen wird. In dieser Position wird die Stellung des Hebels 125 relativ zu der ersten Drehachse D1 somit festgelegt.

Analog weist das zweite Drehlager 133 an dem Lagerelement 141 ausgebildete Vertiefungen 157a, 157b auf. Wird der Arm 103 relativ zu dem Hebel 125 derartig ausgelenkt, dass er um die Drehachse D2 gedreht wird, muss zunächst eine Kraft aufgewendet werden, um den Rastbolzen 149 gegen die Kraft der Feder 153 aus der in Fig. 13 dargestellten Position auszulenken. Ist der Eingriff zwischen dem Rastbolzen 149 und der Vertiefung 157a aufgehoben, kann der Arm 103 weiter um die Drehachse D2 rotiert werden, bis der Rastbolzen 149 Eingriff in die Vertiefung 157b findet. In dieser Position wird der Arm 103 entsprechend über die Einstelleinrichtung umfassend dem Rastbolzen 149 festgelegt.

Im Vergleich zu der Rückblickeinrichtung 1 kann somit auf ein Federelement wie die Druckfeder 21 zur Fixierung des Arms 3 verzichtet werden. Die entsprechende Fixierung erfolgt über die entsprechenden Rasteinrichtung 143, 145. Der Vorteil besteht darin, dass die Bewegung des Hebels 125 bzw. die Bewegung des Arms 103 nach Verlassen der jeweiligen Rastposition, in der der jeweiligen Rastbolzen Eingriff in die jeweilige Vertiefung findet, ohne zusätzlichen Kraftaufwand möglich ist. Darüber hinaus wird das Bauvolumen reduziert und es ist möglich, die Rasteinrichtung 143, 145 in das Zwischenlager 123 zu integrieren, wo es entsprechend besser gegen äußere Einflüsse geschützt ist.

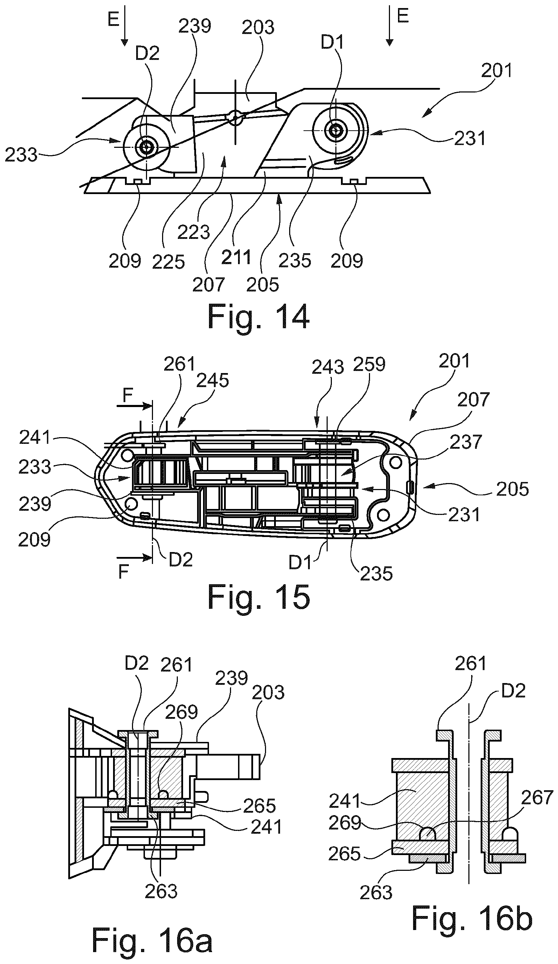

In den Fig. 14 bis 17b ist eine vierte Ausführungsform einer erfindungsgemäßen Rückblickvorrichtung 201 dargestellt. Diejenigen Elemente der Rückblickvorrichtung 201, die denjenigen der Rückblickvorrichtung 1 bzw. 101 entsprechen, tragen die gleichen Bezugszeichen, allerdings um 200 bzw. 100 erhöht.

Die Rückblickvorrichtung 201 weist ebenfalls ein erstes Drehlager 231, mittels dem ein Hebel 225 eines Zwischenlagers 223 um eine Drehachse D1 drehbar über ein Lagerelement 211 an der Befestigungseinrichtung 205 gelagert ist, auf. Darüber hinaus ist eine Drehung eines Arms 203 relativ zu dem Hebel 225 um eine zweite Drehachse D2 mittels eines zweiten Drehlagers 233 möglich.

Das erste Drehlager 231 weist ein erstes Lagerelement 235, welches mit der Befestigungsplatte 207 verbunden ist, auf. Das erste Lagerelement 235 ist gabelförmig ausgebildet, sodass ein zweites Lagerelement 237 zwischen den Gabelarmes des ersten Lagerelements 235 angeordnet ist. Analog weist das zweite Drehlager 233 ein erstes gabelförmiges Lagerelement 239 sowie ein zweites zwischen den Gabeln des Lagerelements 239 angeordnetes zweites Lagerelement 241 auf.

Im Gegensatz zu der Rückblickvorrichtung 101 ist bei der Rückblickvorrichtung 201 entsprechende Rasteinrichtung 243 und 245 derartig ausgebildet, dass eine Bewegung entsprechender Eingriffselemente parallel zu den jeweiligen Drehachsen D1 und D2 erfolgt. Dazu sind im Bereich der jeweiligen Drehlager 231, 233 Rohrnieten 259 und 261 angeordnet. Die Rohrnieten 259 und 261 bilden die entsprechenden Drehachsen für die entsprechenden Lagerelemente.

Nachfolgend wird die Funktionsweise des zweiten Drehlagers 233 an den Fig. 16a bis 17b genauer beschrieben, wobei das erste Drehlager 231 analog aufgebaut ist.

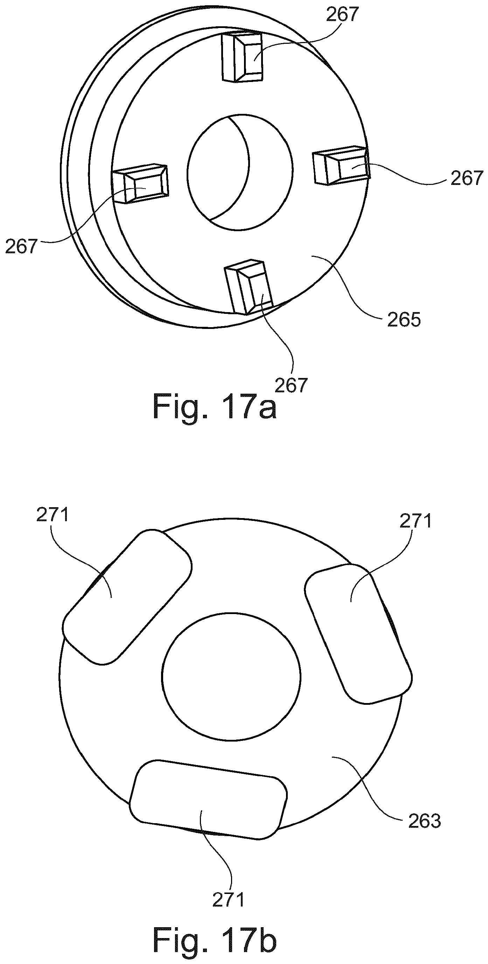

Wie Fig. 16a zu entnehmen ist, durchläuft die Lagerniet 261 die Lagerelemente 239 sowie das Lagerelement 241. Zwischen den Lagerelementen 239 ist darüber hinaus auf der Rohrniet 261 ein in Fig. 17b genauer dargestellte Federring 263 angeordnet. Der Federring 263 bewirkt, dass ein genauer in Fig. 17a dargestellter Rastring 265 in Richtung des Lagerelements 241 entlang der Drehachse D2 gezwungen wird.

Kommt es nun zu einer Drehung des Armes 203 relativ zu dem Hebel 225, geschieht folgendes. Wie Fig. 17a zu entnehmen ist, weist der Rastring 265 Erhebungen 267 auf. In der Fig. 16a dargestellten Position greifen die Erhebungen 267 in entsprechende, in dem Lagerelement 241 ausgebildete Vertiefung 269 ein. Durch die Drehung wird der Rastring 265 entgegen der über Federelemente 271 des Federrings 263 aufgebaute Federkraft derartig ausgelenkt, dass der Rastring 265 sich im Bereich außerhalb der Erhebung 267 von dem Lagerelement 241 abhebt. Durch die weitere Drehung des Arms 203 um den Hebel 225 wird das Lagerelement 241 soweit um die Drehachse D2 gedreht, dass die Erhebungen 267 mit weiteren Vertiefungen 269 in Überdeckung gelangen. In dieser Position bewirken die Federelemente 271, dass der Rastring 265 in Richtung des Lagerelements 241 gezwungen wird und so die Erhebung 267 in Eingriff mit der Vertiefung 269 kommen, sodass der Arm 203 relativ zu dem Hebel 225 festgelegt bzw. gesichert wird.

Wie insbesondere Fig. 16b zu entnehmen ist, ist das Lagerelement 241 exzentrisch auf der Drehachse D2 gelagert. Dies ermöglicht es, die Vertiefungen 269 so auf dem zweiten Lagerelement 241 anzuordnen, dass in der jeweiligen Position die vier Erhebung 267 mit vier Vertiefung 269 in Überdeckung kommen, jedoch nicht zwangsläufig bei einer Drehung um 90 Grad die gleichen Vertiefungen 269 von den Erhebungen 267 in Eingriff genommen werden. So können die Vertiefungen 269 asymmetrisch über die Kulisse des Lagerelements 241 verteilt werden und so in beliebigen Winkeln verschiedene Feststellpositionen des Arms 203 realisiert werden, beispielsweise eine Betriebsposition, eine Parkposition und eine Ausweichposition, die jeweils mit bis zu vier Eingriffen der Erhebungen in jeweilige Vertiefungen gesichert sein können.

Die vierte Ausführungsform ermöglicht es insbesondere die Verrastung in den jeweiligen Positionen zu verbessern und den Bauraum zu optimieren. Auch können Rast- und Haltekräfte besser abgestimmt werden. Dabei wirken zwei unabhängige Rasteinrichtungen auf die jeweiligen Drehlager und durch die Mehrzahl der Rastelemente können hohe Festlegungssicherheiten erreicht werden.

Die in der voranstehenden Beschreibung, in den Figuren und in den Ansprüchen offenbarten Merkmale können sowohl einzeln als auch in beliebiger Kombination wesentlich für die Erfindung in ihren verschiedenen Ausführungsformen sein.

### Bezugszeichenliste

- 1, 1', 101, 201: Rückblickvorrichtung
- 3, 3', 103, 203: Arm
- 5, 5', 105, 205: Befestigungseinrichtung
- 7, 7', 107, 207: Befestigungsplatte
- 9, 9', 109, 209: Befestigungspunkt
- 11, 11', 111, 211: Lagerelement
- 13: Sensor
- 15: Sensor
- 17: Fahrzeug
- 19, 19': Halteraste
- 21, 21': Zugfeder
- 23. 23', 123, 233: Zwischenlager
- 25, 25', 125, 225: Hebel
- 131, 231: Drehlager
- 133,233: Drehlager
- 135,235: Lagerelement
- 137,237: Lagerelement
- 139,239: Lagerelement
- 141, 241: Lagerelement
- 143,243: Rasteinrichtung
- 145,245: Rasteinrichtung
- 147: Eingriffselement
- 149: Eingriffselement
- 151: Feder
- 153: Feder
- 155a, 155b: Vertiefung
- 157a, 157b: Vertiefung
- 259: Rohrniet
- 261: Rohrniet
- 263: Federring
- 265: Rastring
- 267: Erhebung
- 269: Vertiefung
- 271: Federelement

- A, A': Richtung
- B,: Richtung
- C, C': Richtung
- D: Richtung
- E: Richtung
- F: Richtung
- D1, D1': Drehachse
- D2, D2': Drehachse

- F, F': Hauptfahrtrichtung
- P': Parkposition
- Q, Q': Ausweichposition
- N, N': Betriebsposition

- S1`, S2': Drehrichtung

## Patentansprüche

1. Rückblickvorrichtung (1, 101, 201) für ein Fahrzeug (17), umfassend zumindest einen Sensor (13, 15) zur Erfassung von Informationen der Umgebung des Fahrzeugs (17), wobei die Rückblickvorrichtung (1, 101, 201) mittels zumindest einer ersten Befestigungseinrichtung (5, 105, 205) an der Tragstruktur des Fahrzeugs (17) befestigbar ist, **dadurch gekennzeichnet, dass**
die Rückblickvorrichtung (1, 101, 201) zumindest einen Arm (3, 103, 203) und zumindest ein Federelement (21) umfasst, wobei
• der Arm (3, 103, 203) mittels der ersten Befestigungseinrichtung (5, 105, 205) um zumindest eine, zumindest eine vertikale Komponente aufweisende erste Drehachse (D1) um zumindest einen ersten Drehpunkt für eine erste Drehung drehbar gelagert ist,
• der Arm (3) mittels einer Drehung um die erste Drehachse (D1) in zumindest eine Ausweichposition (Q) und/oder zumindest eine Betriebsposition (N) überführbar ist, und
• der Arm (3) mittels des Federelements (21) in die Betriebsposition (N) zwingbar ist.

2. Rückblickvorrichtung nach Anspruch 1, **dadurch gekennzeichnet, dass** der Sensor (13, 15) zumindest eine Kamera, zumindest einen IR-Sensor, zumindest einen Radarsensor, zumindest einen Ultraschallsensor, zumindest einen Lidarsensor und/oder zumindest einen Time of flight (TOF)-Sensor umfasst.

3. Rückblickvorrichtung nach Anspruch 1 oder 2, **dadurch gekennzeichnet, dass** die Umgebung des Fahrzeugs (17) bezüglich einer Hauptfahrrichtung (F) des Fahrzeugs (17) zumindest einen Seitenbereich, zumindest einen Heckbereich, zumindest einen Frontbereich und/oder zumindest einen Innenraumbereich zumindest teilweise umfasst.

4. Rückblickvorrichtung nach einem der vorangehenden Ansprüche, **dadurch gekennzeichnet, dass**
die erste Befestigungseinrichtung (15) zumindest eine den Drehpunkt aufweisende und mit der Tragstruktur zumindest mittelbar in Wirkverbindung stehende Befestigungsplatte (7) aufweist.

5. Rückblickvorrichtung nach einem der vorangehenden Ansprüche, **dadurch gekennzeichnet, dass**
der Arm (3) in der Betriebsposition (N) mittels zumindest einer Halteraste (19) feststellbar ist.

6. Rückblickvorrichtung nach einem der vorangehenden Ansprüche, **gekennzeichnet durch** zumindest ein weiteres Federelement zusätzlich zu dem Federelement (21), umfassend
• zumindest ein erstes weiteres Federelement, mittels dem der Arm (3) in die Ausweichposition (Q) zwingbar ist, und/oder
• zumindest ein zweites weiteres Federelement, vorzugsweise ein Paar zweitere weiterer Federelemente, mittels dem der Arm (3) in der Betriebsposition (N) haltbar ist.

7. Rückblickvorrichtung nach einem der vorangehenden Ansprüche **dadurch gekennzeichnet, dass**
der Arm (3) über zumindest ein erstes Zwischenlager (23) mit dem ersten Drehpunkt verbunden ist, wobei vorzugsweise das Zwischenlager (23) um den ersten Drehpunkt und/oder die erste Drehachse (D1) drehbar ist bei einer Bewegung des Arms (3) aus der Betriebsposition (N) in die Ausweichposition (Q) und/oder aus der Ausweichposition (Q) in die Betriebsposition (N).

8. Rückblickvorrichtung nach Anspruch 7, **dadurch gekennzeichnet, dass** das Zwischenlager (23) eine zweite Drehung des Arms (3) um zumindest eine, vorzugsweise zu der ersten Drehachse (D1) beabstandete und/oder parallel zu der ersten Drehachse (D1) verlaufende, zweite Drehachse (D2) und/oder einen, insbesondere von dem ersten Drehpunkt beabstandeten, zweiten Drehpunkt ermöglicht.

9. Rückblickvorrichtung nach Anspruch 7 oder 8, **dadurch gekennzeichnet, dass** das Zwischenlager (23) zumindest ein den ersten Drehpunkt und den zweiten Drehpunkt verbindendes Hebelelement (25) umfasst.

10. Rückblickvorrichtung nach einem der Ansprüche 7 bis 9, **dadurch gekennzeichnet, dass** bei der ersten Drehung, insbesondere bei einer Bewegung des Arms (3) aus der Betriebsposition (N) in die Ausweichposition (Q) und umgekehrt, das Zwischenlager (23) samt Arm (3) um die erste Drehachse (D1) drehbar ist, vorzugsweise eine Drehung des Arms (3) um die zweite Drehachse (D2) unterbleibt.

11. Rückblickvorrichtung nach einem der Ansprüche 7 bis 10, **dadurch gekennzeichnet, dass** der Arm (3) mittels der zweiten Drehung aus der Betriebsposition (N) in zumindest eine, vorzugsweise der Ausweichposition (Q) entgegengesetzte Parkposition (P) überführbar ist, vorzugsweise in der Parkposition (P), insbesondere mittels zumindest eines dritten weiteren Federelements, festlegbar ist.

12. Rückblickvorrichtung nach einem der vorangehenden Ansprüche, **gekennzeichnet durch** zumindest ein, vorzugsweise zumindest bereichsweise im ersten Drehpunkt angeordnetes und/oder die Drehung um die erste Drehachse (D1) ermöglichendes, erstes Drehlager (131, 231), und/oder zumindest ein, vorzugsweise zumindest bereichsweise im zweiten Drehpunkt angeordnetes und/oder die Drehung um die zweite Drehachse ermöglichendes, zweites Drehlager (133, 233).

13. Rückblickvorrichtung nach Anspruch 12, **dadurch gekennzeichnet, dass** das erste Drehlager (131, 231) zumindest ein mit der Befestigungseinrichtung (105, 205) in Wirkverbindung stehendes, insbesondere mit der Befestigungseinrichtung (105, 205) verbundenes und/oder fixiertes, erstes Lagerelement (135, 235) und zumindest ein mit dem Arm (103, 203) und/oder dem Zwischenlager (123, 223) in Wirkverbindung stehendes, insbesondere mit dem Arm (103, 203) und/oder dem Zwischenlager (123, 223) verbundenes und/oder fixiertes, zweites Lagerelement (137, 237) umfasst, und/oder das zweite Drehlager (133, 233) zumindest ein mit dem Zwischenlager (123, 223) in Wirkverbindung stehendes, insbesondere mit dem Zwischenlager (123, 223) verbundenes und/oder fixiertes, erstes Lagerelement (139, 239) und zumindest ein mit dem Arm (103, 203) in Wirkverbindung stehendes, insbesondere mit dem Arm (103, 203) verbundenes und/oder fixiertes, zweites Lagerelement (141, 241) umfasst, wobei insbesondere das erste Lagerelement (135, 235, 139, 239) und/oder das zweite Lagerelement (141, 241, 137, 237) exzentrisch bezüglich der ersten Drehachse (D1) und/oder der zweiten Drehachse (D2) gelagert ist bzw. sind.

14. Rückblickvorrichtung nach Anspruch 12 oder 13, **dadurch gekennzeichnet, dass** das erste Drehlager (131, 231) und/oder das zweite Drehlager (133, 233) eine Drehung um die erste Drehachse (D1) bzw. die zweite Drehachse (D2) stufenlos und/oder in zumindest zwei, vorzugsweise einer Vielzahl von vordefinierten Schritten ermöglicht.

15. Rückblickvorrichtung nach einem der Ansprüche 12 bis 14, **dadurch gekennzeichnet, dass** das erste Drehlager (131, 231) und/oder das zweite Drehlager (133, 233) zumindest eine Einstellenrichtung (143, 243, 145, 245) umfasst, wobei die Einstelleinrichtung (143, 243, 145, 245) zumindest eine Feststelleinrichtung, zumindest eine Klemmvorrichtung, zumindest eine Rastvorrichtung und/oder zumindest eine Arretiervorrichtung umfasst.

16. Rückblickvorrichtung nach Anspruch 15, **dadurch gekennzeichnet, dass** die Einstelleinrichtung (143, 243, 145, 245) zumindest ein mit dem ersten Lagerelement (135, 139, 235, 239) mitnahmesicher verbundenes erstes Eingriffselement (155a, 155b, 149, 256) und zumindest ein mit dem zweiten Lagerelement (137, 141, 237, 241) mitnahmesicher verbundenes zweites Eingriffselement (157a, 157b, 147, 269) umfasst, wobei das erste Eingriffselement in zumindest einer, vorzugsweise einer Vielzahl von, Drehpositionen in das zweite Eingriffselement eingreift oder das zweite Eingriffselement in zumindest einer, vorzugsweise einer Vielzahl von, Drehpositionen in das erste Eingriffselement eingreift.

17. Rückblickvorrichtung nach Anspruch 16, **dadurch gekennzeichnet, dass** das erste Eingriffselement (149, 265) relativ zu dem ersten Lagerelement (135, 235) bewegbar gelagert ist und mittels zumindest eines ersten Vorspannelementes (153, 263), insbesondere umfassend zumindest ein vierten weiteren Federelement, in Richtung des zweiten Lagerelementes (141) und/oder des zweiten Eingriffselementes (157a, 157b) vorgespannt ist und/oder das zweite Eingriffselement (147) relativ zu dem zweiten Lagerelement (137) bewegbar gelagert ist und mittels zumindest eines zweiten Vorspannelementes (151), insbesondere umfassend zumindest ein fünftes weiteres Federelement, in Richtung des ersten Lagerelementes (131) und/oder des ersten Eingriffselementes (155a, 155b) vorgespannt ist.

18. Rückblickvorrichtung nach Anspruch 16 oder 17, **dadurch gekennzeichnet, dass** das erste Eingriffselement zumindest einen Stift, zumindest einen Bolzen (149), zumindest eine Erhebung (267) und/oder zumindest einen Rastring (265) umfasst und das zweite Eingriffselement zumindest zwei, vorzugsweise eine Mehrzahl von komplementär zu zumindest einem Bereich des ersten Eingriffselementes ausgebildeten Aufnahmen, Vertiefungen (157a, 157b) und/oder Senken umfasst oder das zweite Eingriffselement zumindest einen Stift, zumindest einen Bolzen (147), zumindest eine Erhebung und/oder zumindest einen Rastring umfasst und das erste Eingriffselement zumindest zwei, vorzugsweise eine Mehrzahl von komplementär zu zumindest einem Bereich des ersten Eingriffselementes ausgebildeten Aufnahmen, Vertiefungen (155a, 155b) und/oder Senken umfasst.

19. Rückblickvorrichtung nach einem der Ansprüche 17 oder 18, **dadurch gekennzeichnet, dass**
das erste Eingriffselement (149) oder das zweite Eingriffselement (147) in eine Richtung im Wesentlichen senkrecht zu der ersten Drehachse (D1) und/oder der zweiten Drehachse (D2) bewegbar gelagert ist.

20. Rückblickvorrichtung nach Anspruch 19, **dadurch gekennzeichnet, dass** das erste Eingriffselement zumindest einen Rastbolzen (149) umfasst, wobei der Rastbolzen (149) mittels des ersten Vorspannelementes (153) in Eingriff mit zumindest eine von dem zweiten Eingriffselement (141) umfasste, zumindest eine Vertiefung (157a, 157b) umfassende Kulisse zwingbar ist oder das zweite Eingriffselement zumindest einen Rastbolzen (147) umfasst, wobei der Rastbolzen (147) mittels des zweiten Vorspannelementes (151) in Eingriff mit zumindest eine von dem ersten Eingriffselement (135) umfasste, zumindest eine Vertiefung (155a, 155b) umfassende Kulisse zwingbar ist.

21. Rückblickvorrichtung nach einem der Ansprüche 17 oder 18, **dadurch gekennzeichnet, dass**
das erste Eingriffselement (265) oder das zweite Eingriffselement in eine Richtung im Wesentlichen parallel zu der ersten Drehachse (D1) und/oder der zweiten Drehachse (D2) bewegbar gelagert ist.

22. Rückblickvorrichtung nach Anspruch 21, **dadurch gekennzeichnet, dass** das erste Eingriffselement in Form zumindest eines, vorzugsweise zumindest eine Erhebung (267), insbesondere eine Vielzahl von Erhebungen (267) aufweisenden Rastrings (265) ausgebildet ist, wobei der Rastring mittels des ersten, vorzugsweise zumindest einen Federring (263) aufweisenden, Vorspannelementes, in Richtung des zweiten Eingriffselementes zwingbar ist oder das zweite Eingriffselement in Form zumindest eines, vorzugsweise zumindest eine Erhebung, insbesondere eine Vielzahl von Erhebungen aufweisenden Rastrings ausgebildet ist, wobei der Rastring mittels des zweiten, vorzugsweise zumindest einen Federring aufweisenden, Vorspannelementes, in Richtung des ersten Eingriffselementes zwingbar ist.

23. Rückblickvorrichtung nach Anspruch 22, **dadurch gekennzeichnet, dass** der Rastring (265) und das erste und/oder zweite Vorspannelement (263) mittels zumindest einer sich entlang der ersten Drehachse (D1) oder der zweiten Drehachse (D2) ersteckenden Achselementes, vorzugsweise umfassend zumindest eine Rohrniet, (259, 261) gelagert sind.

24. Rückblickvorrichtung nach einem der vorangehenden Ansprüche, **dadurch gekennzeichnet, dass**
das Federelement und/oder das erste, zweite, dritte, vierte und/oder fünfte weitere Federelement zumindest eine Zugfeder (21), zumindest eine Druckfeder, zumindest eine Federscheibe und/oder zumindest eine Formfeder umfasst bzw. umfassen und/oder das zweite, dritte, vierte und/oder fünfte weitere Federelement zumindest eine Rastfeder umfasst.

25. Rückblickvorrichtung nach einem der vorangehenden Ansprüche, **dadurch gekennzeichnet, dass**
der Sensor (13, 15) mittels zumindest einer zweiten Befestigungseinrichtung an dem Arm (3) festlegbar ist, wobei
vorzugsweise mittels der zweiten Befestigungseinrichtung der Abstand des Sensors (13, 15) in Bezug auf den ersten Drehpunkt und/oder den zweiten Drehpunkt veränderbar ist, insbesondere eine radiale Position des Sensors (13, 15) entlang des Arms (3) bezüglich des ersten Drehpunktes und/oder des zweiten Drehpunktes veränderbar ist.

26. Rückblickvorrichtung nach Anspruch 25, **dadurch gekennzeichnet, dass** die zweite Befestigungseinrichtung zumindest eine Klemmvorrichtung, zumindest eine Schraubvorrichtung, zumindest eine Rastvorrichtung, zumindest eine magnetische Verbindungsvorrichtung, zumindest eine Klebevorrichtung und/oder zumindest eine Spannvorrichtung umfasst.

27. Rückblickvorrichtung nach einem der vorangehenden Ansprüche, **dadurch gekennzeichnet, dass**
die erste Drehung, die zweite Drehung und/oder die Bewegung des Sensors (13, 15) entlang des Arms (3) und/oder entlang des Fahrzeugs mittels zumindest eines Aktuators erreichbar ist, vorzugsweise während einer Bewegung des Fahrzeugs (17).
ist.
